(19) Europäisches Patentamt
European Patent Office
Office européen des brevets

(11) **EP 2 234 240 B1**

(12) **EUROPÄISCHE PATENTSCHRIFT**

(45) Veröffentlichungstag und Bekanntmachung des Hinweises auf die Patenterteilung:
**11.04.2018   Patentblatt 2018/15**

(51) Int Cl.:
*H02J 9/06* *(2006.01)*      *H02J 9/02* *(2006.01)*
*H05B 33/08* *(2006.01)*

(21) Anmeldenummer: **10169401.6**

(22) Anmeldetag: **19.01.2007**

(54) **LED-Treiberschaltung**

LED driving circuit

Circuit de commande de DEL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006   DE 102006018531**
**03.07.2006   DE 102006030655**

(43) Veröffentlichungstag der Anmeldung:
**29.09.2010   Patentblatt 2010/39**

(60) Teilanmeldung:
**11154704.8 / 2 323 240**
**13198488.2 / 2 717 425**

(62) Dokumentnummer(n) der früheren Anmeldung(en) nach Art. 76 EPÜ:
**07702900.7 / 2 011 213**

(73) Patentinhaber: **Tridonic GmbH & Co KG**
**6851 Dornbirn (AT)**

(72) Erfinder:
• **Stevens, Frederick**
**Spennymoor, Durham DL 16 7LE (GB)**
• **Wallhead, Geoff**
**Newton Aycliffe, Durham DL5 5HL (GB)**
• **Rohner, Daniel**
**1220, Wien (AT)**
• **Mair, Alexander**
**1220, Wien (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A1- 1 202 428      EP-A1- 1 274 286**
**EP-A2- 0 948 241      GB-A- 2 258 571**
**US-A1- 2005 001 562   US-A1- 2005 212 459**
**US-B1- 7 015 654      US-B2- 6 858 994**

EP 2 234 240 B1

**Beschreibung**

Die vorliegende Erfindung bezieht sich auf Schaltungen zum Betrieb von Leuchtdioden.

Aus dem Stand der Technik ist zum Beispiel bekannt, dass die Patentanmeldung EP 1202428 eine Notlichteinheit offenbart, die eine Batterie umfasst, um einer Lampe im Notfallbetrieb zu versorgen. Bei der Lampe handelt es sich in erster Linie um eine Gasentladungslampe. Der Versorgungsstrom der von der Batterie geliefert wird, wird durch eine Kontrollschaltung konstant gehalten.

EP0948241 beschreibt eine Methode und einen Apparat zur Leistungsversorgung einer LED-Matrix-Anordnung. Dabei wird die Matrix-LED-Anordnung derart angesteuert, dass Spannungsfluktuationen über den zur LED in Serie geschalteten Widerständen so gering wie möglich gehalten werden.

EP1274286 beschreibt eine Notfallbeleuchtungs-Anordnung und einen Notfallbeleuchtungsapparat, welcher u.a. eine Batterie, ein dimmbares Vorschaltgerät und eine Leuchtstofflampe umfasst. Durch den Dimmer soll die Eingangsleistung des Vorschaltgerätes im Notfallbetrieb heruntergesetzt werden, so dass, im Vergleich zum Normalbetrieb, die Lampe im Notfall mit einer geringeren Leistung betrieben wird, um die Nutzungsdauer der Batterie im Notfallbetrieb zu verlängern.

US2005/0001562 beschreibt eine LED Kompensationsschaltung welche eine Anpassung elektrischer Parameter für eine Vielzahl von LEDs vornimmt. Bei den LED-Lichtquellen handelt es sich um Warnleuchten für Kraftfahrzeuge, wie sie z.B. bei Krankenwagen benutzt werden. Ein Ziel ist es bei dieser Erfindung eine effiziente Beleuchtung mit LED-Lichtquellen für Fahrzeuge bereitzustellen, die u.a. die den Anschein erzeugen, dass sie z.B. rotieren oder blinken.

GB2258571 beschreibt ein Notfallbeleuchtungssystem, welches eine Vielzahl von Lichteinheiten inklusive Leuchten, eine Kotrollereinheit, eine Spannungsversorgung in Form einer Batterie und eine Lichtdetektionseinheit umfasst. Das vorgenannte Notfallbeleuchtungssystem hat u.a. zur Aufgabe zu testen, ob die Leuchten des Notfallbeleuchtungssystem funktionieren. Dies geschieht mit Hilfe einer Lichtsensoreinheit, die der Kontrolllogik mitteilt, ob die Lichtquelle leuchtet.

US6858994 beschreibt eine LED Lichtquelle, die über eine Schaltung, welche über die gewöhnliche Netzspannung betrieben wird angesteuert wird. Die Ansteuerung hat dabei zur Aufgabe, den Strom durch die LEDs konstant zu halten. Die vorgenannte Anmeldung umfasst jedoch keine Batteriestromquelle, die im Falle eines Notfalles die Stromversorgung der LEDs übernimmt.

Auch wenn in der vorliegenden Beschreibung die Erfindung bezugnehmend auf Notlichtgeräte mit LEDs beschrieben werden wird, so ist zu verstehen, dass sich die Erfindung ganz allgemein auf LED-Betriebsschaltungen bezieht.

Notlichtgeräte weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Der vorliegenden Erfindung liegt nunmehr die Aufgabe zugrunde, eine Schaltung zum Betrieb von LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Nachfolgend soll die Erfindung anhand der beiliegenden Zeichnung näher erläutert werden. Es zeigen:

Fig. 1   schematisch das Schaltbild eines ersten Ausführungsbeispiels eines erfindungsgemäßen Notlichtgeräts;

Fig. 2   ein zweites Ausführungsbeispiel eines Notlichtgeräts;

Fig. 3   eine Grafik zur Ermittlung der Netzversorgungsspannung auf Basis von an der Ausgangsseite der Ladeschaltung gemessenen Betriebsparametern,

Fig. 4   eine weitere Grafik zur Ermittlung der Sekundärleistung der Ladeschaltung, welche zur indirekten Bestimmung der Lichtquellenleistung berücksichtigt wird,

Fig. 5   eine Illustration einer erfindungsgemässen Batterieschaltung,

Fig. 6   eine erfindungsgemässe LED-Treiberschaltung, und

Fig. 7   die Ansteuerung des Treiberschalters sowie den sich ergebenden Diodenstrom.

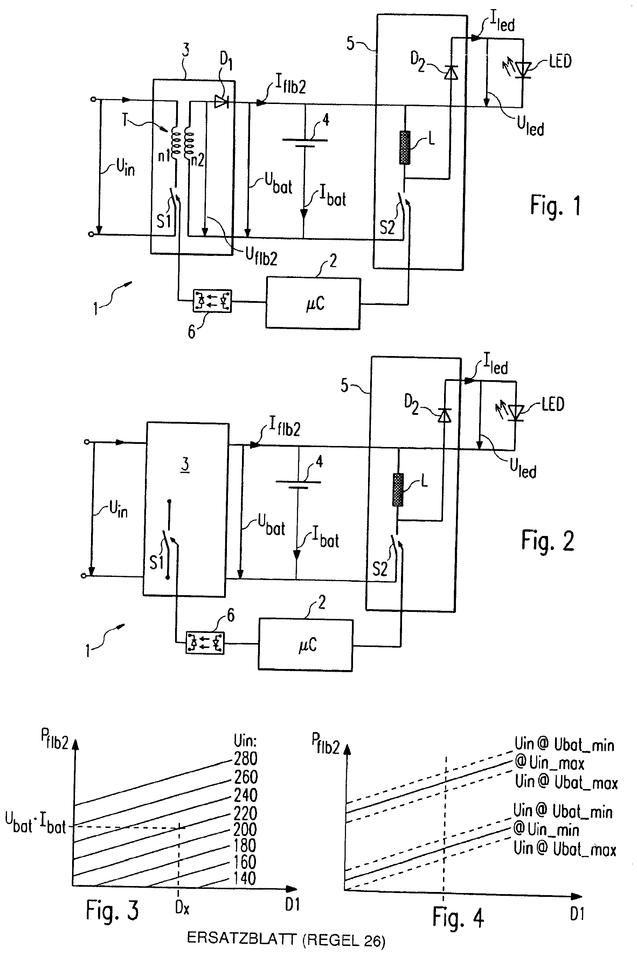

Das in Fig. 1 in vereinfachter Weise dargestellte und allgemein mit dem Bezugzeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Dabei kann auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Ausführungsbeispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein zweites, etwas allgemeineres Ausführungsbeispiel eines erfindungsgemäßen Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles $D_1$ für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle $D_1$ für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Ausführungsbeispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen.

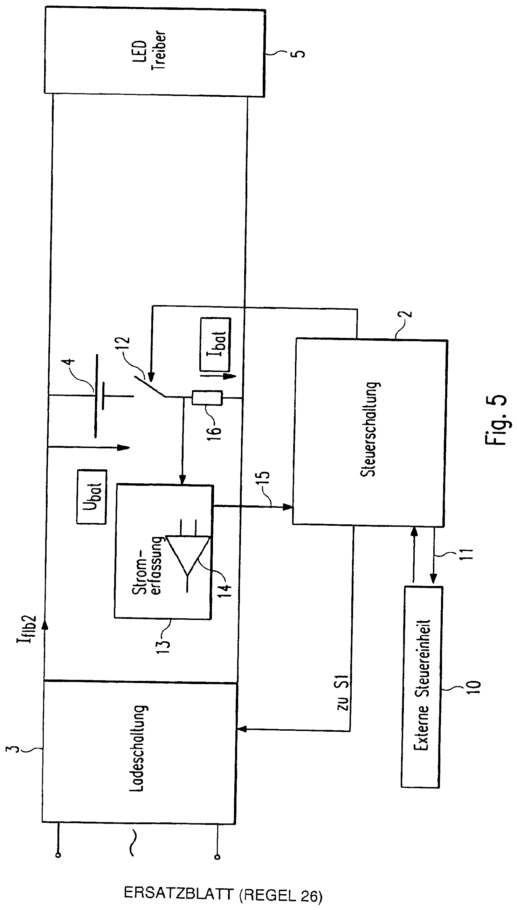

Bezug nehmend auf Figur 5 sollen nunmehr Einzelheiten der Verschaltung der Batterie 4 erläutert werden.

Wie in Figur 5 ersichtlich, ist in Serie zu der Batterie 4 ein Element 12 verschaltet, dass die Funktion eines Linearreglers und/oder eines Schalters aufweisen kann. Beispielsweise kann dieses Element 12 ein Transistor sein. In Serie zu der Batterie 4 ist weiterhin ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen. Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestroms auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Erfindungsgemäß kann diese Tiefentladung mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

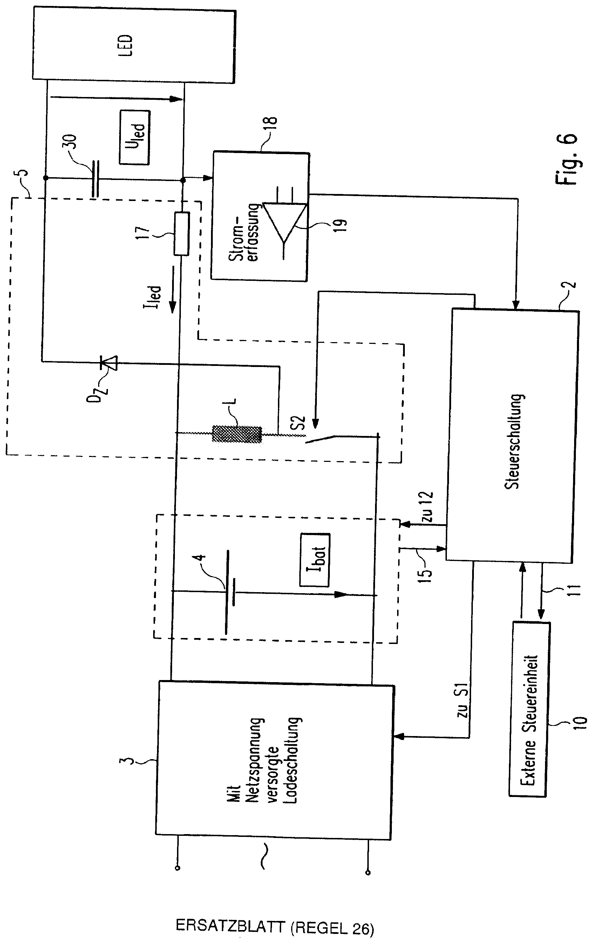

Figur 6 zeigt weitere Einzelheiten zur einer erfindungsgemäßen LED-Treiberschaltung 5. Sämtliche Merkmale der Batterieschaltung von Figur 5 lassen sich im übrigen (wahlweise) mit der Schaltung von Figur 6 kombinieren.

Das Grundprinzip der Treiberschaltung 5 ist, wie bereits eingangs beschrieben, ein Schaltregler, bei dem bei geschlossenem Schalter S2 die Spule L aufmagnetisiert wird und sich die magnetische Energie bei wiedergeöffnetem Schalter S2 über einen Strompfad entlädt, der in Serie eine Zenerdiode, wenigstens eine LED sowie einen Ohmschen Widerstand 17 aufweist.

Bekanntlich ist es verhältnismäßig einfach, den Stromfluß durch die Dioden bei geschlossenem Schalter S2 zu messen.

Dagegen ist es etwas komplexer, den Stromfluß durch die LEDs bei geöffnetem Schalter S2 zu messen.

Zur Stromerfassung ist erfindungsgemäß der Widerstand 17 in Serie zu den LEDs geschaltet, wobei dieser Widerstand 17 ein Beispiel für ein Stromerfassungsmittel darstellt.

Eine Stromerfassungseinheit 18 kann beispielsweise einen Komparator 19 aufweisen.

Ein Stromerfassungssignal, d.h. ein den Strom durch die LEDs wiedergebendes Signal wird der Steuerschaltung 2 zugeführt. Die Steuerschaltung 2 kann das Schaltverhalten des Schalters S2 u.a. abhängig von dem Stromerfassungssignal ausgestalten.

Ein Kondensator 30 ist parallel zu der wenigstens einen LED geschaltet. Der Kondensator 30 glättet den LED-Strom, indem er Energie speichert und die Spannung über der wenigstens einen LED im wesentlichen konstant hält. Der Kondensator 30 ist dabei derart bemessen, dass weiterhin die Regelung der LED-Spannung möglich ist.

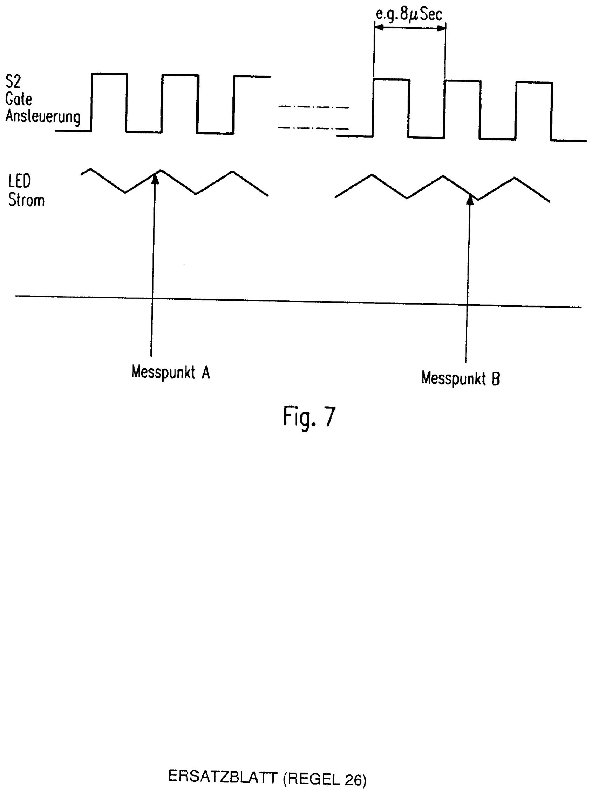

Figur 7 zeigt schematisch die Ansteuerung des Schalters S2, d.h. für den Fall, dass dieser Schalter als FET-Transistor ausgebildet ist, die Ansteuerung des Gate dieses Transistors in der Zusammenschau mit dem sich einstellenden Strom durch die LEDs. Während der Einschaltzeitdauer des Schalters S2 steigt der Strom durch die LEDs jeweils an. Während der Ausschaltzeitdauer sinkt er, getrieben durch die magnetische Energie der Spule L wieder ab. Somit ergibt sich ein um einen festen DC-Wert zickzackförmiger Verlauf des Stroms durch die LED. Die Stromerfassung soll nunmehr insbesondere den zeitlichen Mittelwert dieses Stroms ermitteln können, um somit beispielsweise die Leistung der LEDs entweder auf einen konstanten Wert oder auf einen frei wählbaren Wert (Dimming) wählen zu können.

Erfindungsgemäß ist vorgesehen, dass die Steuerschaltung 2, die das Schaltverhalten des Schalters S2 vorgibt und somit kennt, den Stromwert zu einem ersten Meßpunkt A sowie zu einem zweiten Meßpunkt B ermittelt, um daraus wiederum den Mittelwert zu bilden. Aus dem Mittelwert des Stromwerts zum Meßzeitpunkt A und Meßzeitpunkt B ergibt sich dann der zeitliche Mittelwert des LED-Stroms.

Der Meßpunkt B ist dabei so gewählt, dass er im Bereich des Endes des Ausschaltens des Schalters S2 liegt, während der Zeitpunkt A derart gewählt ist, dass er am Ende der Einschaltzeitdauer liegt.

Vorzugsweise wird für einen Messzyklus eine Messung mehrerer Minimal- und Maximalwerte ausgeführt. Somit lassen sich Ungenauigkeiten bezüglich des Messzeitpunkts herausmitteln. Für dieses Messprinzip sind die Messzeitpunkte mit der Taktung des Schalters S2 synchronisiert. Indessen kann es bei dieser Synchronisierung zu Ungenauigkeiten kommen, die bspw. durch die Verzögerungen von A/D-Wandlern begründet werden. Diese Ungenauigkeiten werden durch die Erfassung mehrere Werte herausgemittelt.

Somit lässt sich also der zeitliche Mittelwert des Stroms durch die LED erfassen, und die Steuereinheit 2 kann abhängig davon die Schaltfrequenz und/oder das Tastverhältnis des Schalters S2 einstellen. Zum Dimmen der LED kann die Steuereinheit 2 beispielsweise der hochfrequenten Taktung des Schalters S2 eine im Vergleich dazu niederfrequente Modulation beispielsweise in Form einer PWM-Modulation überlagern. Dies stellt eine alternative oder zusätzliche Möglichkeit zur Dimmung dar, da wie oben ausgeführt das Dimmen auch durch Änderung der hochfrequenten Taktung des Schalters S2 selbst erfolgen kann.

Erfindungsgemäß kann indessen das Dimmen der LED, d.h. die Einstellung des LED-Stroms auf einen definierten einwählbaren Wert, auch abhängig von anderen Größen erfolgen. Beispielsweise kann das Dimmen abhängig von einem erfassten Batterieentladestrom (siehe Schaltung von Figur 5) erfolgen, um somit die Batterielebenszeit zu verlängern.

Die Treiberschaltung 5 kann die LED auch dimmen, wenn der Mittelwert der Netzspannung, die die Ladeschaltung 3 versorgt, unter einen vorgegebenen Wert absinkt. Als weitere assistierende Maßnahme zur Verlängerung der Batterielebensdauer kann der Flyback-Konverter in der Ladeschaltung 3 in einen gepulsten Betrieb versetzt werden, so dass also der Flyback-Konverter assistierend zu der schwächer werdenden Batteriespannung die Treiberschaltung 5 versorgt.

Um eine Entladung der Batteriespannung zur Batterie 4 zu erfassen, kann die Batteriespannung erfasst werden (siehe wiederum Figur 5).

Weiterhin kann zusätzlich zu der LED-Stromerfassung eine LED-Spannungserfassung erfolgen. Eine Softstart-Funktion kann vorgesehen sein, bei der die Steuerschaltung 2 bei Inbetriebnahme zuerst einen verhältnismäßig geringen Teststrom durch die LED(s) fliessen lässt. Die Testmessung soll elektrische Parameter ermitteln, um herauszufinden, ob eine bzw. welche LED an die Treiberschaltung 5 angeschlossen ist. Beispielsweise kann ermittelt werden, welche LED-Spannung sich bei dem vorgegebenen Teststrom ergibt. Daraus können Rückschlüsse auf die Art (Farbe) und Anzahl der angeschlossenen LEDs getroffen werden, um wiederum abhängig davon den stationären Betriebsstrom angepasst an die ermittelten LED-Type zu regeln.

Grundsätzlich kann vorgesehen sein, dass die Steuereinheit 2 bei Inbetriebnahme den LED-Strom durch entsprechende Ansteuerung des Schalters S2 der Treiberschaltung 5 ausgehend von einem niedrigen Wert hin zu dem stationären Betriebswert für den LED-Strom erhöht.

Wenn das Anlegen des Teststroms das Fehlen oder einen Störfall einer LED ergibt, können automatisch in vorgegebenen Abständen eine Wiederholung des Anlegens der Testspannung erfolgen, bis das Einsetzen einer ordnungsgemäßen LED erfasst wird.

Wie gesagt kann der Strom durch die LED entweder durch Überlagerung einer niederfrequenten Modulation zu der hochfrequenten Taktung des Schalters S2 und/oder durch eine Veränderung (Tastverhältnis, Frequenz) der hochfrequenten Taktung selbst erfolgen.

**Patentansprüche**

1. Schaltung zum Betreiben wenigstens einer LED, aufweisend:

   - eine Treiberschaltung (5) mit einer Spule (L) und einem mit der Spule in Serie geschalteten und hochfrequent getakteten Schalter (S2), wobei bei geschlossenem Schalter die Spule aufmagnetisiert wird und bei geöffnetem Schalter die Spule in Form eines Stroms durch die LED über einen Entmagnetisierungsstrompfad entmagnetisiert wird, und
   - eine Steuereinheit (2) zum Ansteuern des Schalters,
   **dadurch gekennzeichnet, dass**
   in dem Entmagnetisierungsstrompfad ein Stromerfassungsmittel (17) vorgesehen ist, das ein Strom-Erfassungssignal zu der Steuereinheit (2) liefert, wobei das Strom-Erfassungssignal ein den Strom durch die LED wiedergebendes Signal ist, weiterhin aufweisend eine Energiespeichereinheit (4) in Form einer Batterie zur Versorgung der Treiberschaltung (5), eine Batterieentladestrom-Erfassungseinheit, die mit der Steuereinheit (2) derart funktionell verbunden ist, dass durch die Steuereinheit (2) ein Batterieentladestrom messbar ist, wobei zur Regelung des Batterieentladestroms der Strom durch die LED abhängig von dem erfassten Batterieentladestrom durch Veränderung der Schaltfrequenz und/oder des Tastverhältnisses des Schalters (S2) der Treiberschaltung (5) einstellbar ist.

2. Schaltung zum Betreiben wenigstens einer LED, aufweisend:

- eine Treiberschaltung (5) mit einer Spule (L) und einem mit der Spule in Serie geschalteten und hochfrequent getakteten Schalter (S2), wobei bei geschlossenem Schalter die Spule aufmagnetisiert wird und bei geöffnetem Schalter die Spule in Form eines Stroms durch die LED über einen Entmagnetisierungsstrompfad entmagnetisiert wird,
und
- eine Steuereinheit (2) zum Ansteuern des Schalters,
**dadurch gekennzeichnet, dass** in dem Entmagnetisierungs-Strompfad ein Stromerfassungsmittel (17) vorgesehen ist, das ein Strom-Erfassungssignal für den Strom durch die LED liefert, weiterhin aufweisend eine Energiespeichereinheit (4) in Form einer Batterie zur Versorgung der Treiberschaltung (5), eine Batteriespannung-Erfassungsschaltung, wobei die Steuereinheit (2) eine Batteriespannung als Messgröße auswertet und den hochfrequent getakteten Schalter (S2) der Treiberschaltung (5) ansteuert, wobei der Strom durch die LED abhängig von einem Ausgangssignal der Batteriespannung-Erfassungsschaltung durch Veränderung der Schaltfrequenz und/oder des Tastverhältnisses des Schalters (S2) der Treiberschaltung (5) einstellbar ist.

3. Notlichtgerät,
aufweisend eine Schaltung nach einem der vorhergehenden Ansprüche.

4. Verfahren zum Betreiben wenigstens einer LED mit einer Schaltung aufweisend eine Treiberschaltung (5) mit einer Spule und einem mit der Spule in Serie geschalteten und hochfrequent getakteten ansteuerbaren Schalter,
wobei:

   - bei geschlossenem Schalter die Spule aufmagnetisiert wird und
   - bei geöffnetem Schalter die Spule in Form eines Stroms durch die LED über einen Entmagnetisierungspfad entmagnetisiert wird,

   **dadurch gekennzeichnet dass**,
   in dem Entmagnetisierungsstrompfad ein Stromerfassungsmittel (17) vorgesehen ist,
   wobei:

   - das Stromerfassungsmittel (17) ein Strom-Erfassungssignal liefert, das den Strom durch die LED wiedergibt,
   - die LED ausgehend von einer zur Versorgung der Treiberschaltung (5) geschalteten Batterie (4) betrieben wird,
   - ein Batterieentladestrom erfasst wird und

- zur Regelung des Batterieentladestroms der Strom durch die LED abhängig von dem erfassten Batterieentladestrom durch Veränderung der Schaltfrequenz und/oder des Tastverhältnisses des Schalters der Treiberschaltung (5) eingestellt wird.

5. Verfahren zum Betreiben wenigstens einer LED mit einer Schaltung, aufweisend eine Treiberschaltung (5) mit einer Spule und einem mit der Spule in Serie geschalteten und hochfrequent getakteten ansteuerbaren Schalter,
wobei:

   - bei geschlossenem Schalter die Spule aufmagnetisiert wird und
   - bei geöffnetem Schalter die Spule in Form eines Stroms durch die LED über einen Entmagnetisierungsstrompfad entmagnetisiert wird,

   **dadurch gekennzeichnet, dass**
   in dem Entmagnetisierungsstrompfad ein Stromerfassungsmittel (17) vorgesehen ist,
   wobei:

   - das Stromerfassungsmittel (17) ein Strom-Erfassungssignal liefert, das den Strom durch die LED wiedergibt,
   - die LED ausgehend von einer zur Versorgung der Treiberschaltung (5) geschalteten Batterie (4) betrieben wird,
   - eine Batteriespannung erfasst wird und
   - der Strom durch die LED abhängig von einem Ausgangssignal einer Batteriespannung-Erfassungsschaltung durch Veränderung der Schaltfrequenz und/oder des Tastverhältnisses des Schalters der Treiberschaltung (5) eingestellt wird.

**Claims**

1. A circuit for operating at least one LED, having:

   - a driver circuit (5) with a coil (L) and a switch (S2), which is connected in series with the coil and clocked at high frequency,
   wherein when the switch is closed the coil is magnetized and when the switch is open the coil is demagnetized in the form of a current through the LED over a demagnetization current path, and

      - a control unit (2) for the control of the switch,
      **characterized in that**
      in the demagnetization current path a current detection means (17) is provided, which delivers a current detection signal to the control unit (2), wherein the current detection signal is a signal reproducing the current through the LED, furthermore having an energy storage unit (4) in the form of a battery for the supply of the driver circuit (5), a battery discharge current detection unit, which is connected functionally to the control unit (2) in such a manner that a battery discharge current can be measured by the control unit (2), wherein in order to adjust the battery discharge current the current through the LED can be a adjusted depending on the detected battery discharge current by changing the switching frequency and/or the duty cycle of the switch (S2) of the driver circuit (5).

2.  A circuit for operating at least one LED, having:

    - a driver circuit (5) with a coil (L) and a switch (82), which is connected in series with the coil and clocked at high frequency, wherein when the switch is closed the coil is magnetized and when the switch is open the coil is demagnetized in the form of a current through the LED over a demagnetization current path, and

    - a control unit (2) for the control of the switch,
    **characterized in that** in the demagnization current path a current detection means (17) is provided which delivers the current detection signal for the current through the LED, furthermore having an energy storage unit (4) in the form of a battery for the supply of the driver circuit (5), a battery voltage detection circuit, wherein the control unit (2) evaluates a battery voltage as a measurable variable and controls the high-frequency clocked switch (S2) of the driver circuit (5), wherein the current through the LED can be a adjusted depending on an output signal of the battery voltage detection circuit by changing the switching frequency and/or the duty cycle of the switch (S2) of the driver circuit (5).

3.  An emergency lighting device, having a circuit according to any one of the preceding claims.

4.  A method for operating at least one LED with a circuit having a driver circuit (5) with a coil and a switch, which is connected in series with the coil and is controllable clocked at high frequency, wherein:

    - when the switch is closed the coil is magnetized and
    - when the switch is open the coil is demagnetized in the form of a current through the LED over a demagnetization path,
    **characterized in that**
    in the demagnetization current path a current detection means (17) is provided, wherein:

        - The current detection means (17) delivers a current detection signal, which reproduces the current through the LED,
        - the LED is operated based on a battery (4) connected to the supply of the driver circuit (5),
        - a battery discharge current is detected and
        - in order to adjust the battery discharge current the current through the LED is adjusted depending on the detected battery discharge current by changing the switching frequency and/or the duty cycle of the switch of the driver circuit (5).

5.  A method for operating at least one LED with a circuit, having a driver circuit (5) with a coil and a switch, which is connected in series with the coil and is controllable clocked at high frequency, wherein:

    - when the switch is closed the coil is magnetized and
    - when the switch is open the coil is demagnetized in the form of a current through the LED over a demagnetization current path,
    **characterized in that**
    in the demagnetization current path a current detection means (17) is provided, wherein:

        - The current detection means (17) delivers a current detection signal, which reproduces the current through the LED,
        - the LED is operated based on a battery (4) connected to the supply of the driver circuit (5),
        - a battery voltage is detected and
        - the current through the LED is adjusted depending on an output signal of a battery voltage detection circuit by changing the switching frequency and/or the duty cycle of the switch of the driver circuit (5).

**Revendications**

1.  Circuit destiné à faire fonctionner au moins une LED, présentant :

- un circuit d'excitation (5) avec une bobine (L) et un commutateur (S2) monté en série avec la bobine et cadencé à haute fréquence, la bobine étant magnétisée quand le commutateur est fermé, et, quand le commutateur est ouvert, la bobine étant démagnétisée sous la forme d'un courant traversant la LED par le biais d'un trajet de courant de démagnétisation, et
- une unité de commande (2) pour le pilotage du commutateur,
**caractérisé en ce que**, dans le trajet de courant de démagnétisation, il est prévu un moyen de détection de courant (17) qui fournit à l'unité de commande (2) un signal de détection de courant, le signal de détection de courant étant un signal reproduisant le courant traversant la LED, présentant également une unité d'accumulation d'énergie (4) sous la forme d'une batterie destinée à l'alimentation du circuit d'excitation (5), une unité de détection de courant de décharge de batterie qui est raccordée fonctionnellement à l'unité de commande (2) de telle sorte qu'un courant de décharge de batterie peut être mesuré par l'unité de commande (2), le courant traversant la LED pouvant, pour la régulation du courant de décharge de batterie, être réglé en fonction du courant de décharge de batterie détecté par la variation de la fréquence de commutation et/ou du rapport cyclique du commutateur (S2) du circuit d'excitation (5).

2. Circuit destiné à faire fonctionner au moins une LED, présentant :

   - un circuit d'excitation (5) avec une bobine (L) et un commutateur (S2) monté en série avec la bobine et cadencé à haute fréquence, la bobine étant magnétisée quand le commutateur est fermé et, quand le commutateur est ouvert, la bobine étant démagnétisée sous la forme d'un courant traversant la LED par le biais d'un trajet de courant de démagnétisation, et
   - une unité de commande (2) destinée à piloter le commutateur,
   **caractérisé en ce que**, dans le trajet de courant de démagnétisation, il est prévu un moyen de détection de courant (17) qui fournit un signal de détection de courant pour le courant traversant la LED, présentant en outre une unité d'accumulation d'énergie (4) sous la forme d'une batterie pour l'alimentation du circuit d'excitation (5), un circuit de détection de tension de batterie, l'unité de commande (2) analysant une tension de batterie en tant que grandeur de mesure et pilotant le commutateur (S2) cadencé à haute fréquence du circuit d'excitation (5), le courant traversant la LED pouvant être réglé en fonction d'un signal de sortie du circuit de détection de tension de batterie par la variation de la fréquence de commutation et/ou du rapport cyclique du commutateur (S2) du circuit d'excitation (5).

3. Appareil de lumière de secours, présentant un circuit selon l'une des revendications précédentes.

4. Procédé destiné à faire fonctionner au moins une LED avec un circuit, présentant un circuit d'excitation (5) avec une bobine et un commutateur piloté monté en série avec la bobine et cadencé à haute fréquence,

   - la bobine étant magnétisée quand le commutateur est fermé, et
   - quand le commutateur est ouvert, la bobine étant démagnétisée sous la forme d'un courant traversant la LED par le biais d'un trajet de courant de démagnétisation,
   **caractérisé en ce qu'**il est prévu un moyen de détection de courant (17) dans le trajet de courant de démagnétisation,
   - le moyen de détection de courant (17) fournissant un signal de détection de courant qui reproduit le courant traversant la LED,
   - la LED étant commandée à partir d'une batterie (4) montée pour l'alimentation du circuit d'excitation (5),
   - un courant de décharge de batterie étant détecté, et
   - le courant traversant la LED étant, pour la régulation du courant de décharge de batterie, réglé en fonction du courant de décharge de batterie détecté par la variation de la fréquence de commutation et/ou du rapport cyclique du commutateur (S2) du circuit d'excitation (5).

5. Procédé destiné à faire fonctionner au moins une LED avec un circuit, présentant un circuit d'excitation (5) avec une bobine et un commutateur piloté monté en série avec la bobine et cadencé à haute fréquence,

   - la bobine étant magnétisée quand le commutateur est fermé, et
   - quand le commutateur est ouvert, la bobine étant démagnétisée sous la forme d'un courant traversant la LED par le biais d'un trajet de courant de démagnétisation,
   **caractérisé en ce qu'**il est prévu un moyen de détection de courant (17) dans le trajet de courant de démagnétisation,

- le moyen de détection de courant (17) fournissant un signal de détection de courant qui reproduit le courant traversant la LED,
- la LED étant commandée à partir d'une batterie (4) montée pour l'alimentation du circuit d'excitation (5),
- une tension de batterie étant détectée, et
- le courant traversant la LED étant réglé en fonction d'un signal de sortie d'un circuit de détection de tension de batterie par la variation de la fréquence de commutation et/ou du rapport cyclique du commutateur (S2) du circuit d'excitation (5).

Fig. 1

Fig. 2

Fig. 3

Fig. 4

ERSATZBLATT (REGEL 26)

Fig. 5

ERSATZBLATT (REGEL 26)

Fig. 6

EP 2 234 240 B1

e.g. 8μSec

S2
Gate
Ansteuerung

LED
Strom

Messpunkt A

Messpunkt B

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1202428 A
- EP 0948241 A
- EP 1274286 A
- US 20050001562 A
- GB 2258571 A
- US 6858994 B